# EUROPÄISCHE PATENTANMELDUNG

(11) **EP 0 923 188 A2**
(43) Veröffentlichungstag der Anmeldung: **16.06.1999**
(21) Anmeldenummer: 98811040.9
(22) Anmeldetag: 19.10.1998
(51) Int. Cl.: H02K 15/12

(54) **Verfahren zur Herstellung eines vorzugsweise als Roebelstab ausgebildeten Leiterstabs und Vorrichtung zur Durchführung dieses Verfahrens**

(30) Priorität: 11.12.1997 DE 19754941
(71) Anmelder: ABB RESEARCH LTD., 8050 Zürich (CH)
(72) Erfinder: Schulz, Daniel, 8802 Kilchberg (CH)
(74) Vertreter: Lück, Gert, Dr.

(57) **Zusammenfassung**

Das Verfahren dient der Herstellung eines Leiterstabs (2). Hierbei wird der unbewickelte Leiterstab (2) mit einem thermoplastischen Isolierband bewickelt und der solchermassen bewickelte Leiterstab (2) in eine druckfeste Form (1) eingesetzt. Der bewickelte Leiterstab (2) wird getrocknet und anschliessend bis über die Fliessgrenze des thermoplastischen Isolierbandes erwärmt. Während des Fliessens des Thermoplasten wird der Leiterstab (2) in der Form (1) unter Druck gesetzt bis Restgase im Thermoplasten atomar gelöst sind. Anschliessend kühlt man den Leiterstab (2) unter Druck bis zur Wiederverfestigung ab. Mit diesem Verfahren lassen sich in einfacher und wirtschaftlicher Weise Leiterstäbe (2) mit gleichmässig guten dielektrischen Eigenschaften herstellen.

## Beschreibung

### TECHNISCHES GEBIET

Bei der Erfindung wird ausgegangen von einem Verfahren zur Herstellung eines vorzugsweise als Roebelstab ausgebildeten Leiterstabs der Wicklung einer elektrischen Maschine nach dem Oberbegriff von Patentanspruch 1. Die Erfindung betrifft auch eine Vorrichtung zur Durchführung des Verfahrens.

### STAND DER TECHNIK

Die Wicklungen elektrischer Maschinen, in denen die Abmessungen der Wicklungen eine vorgegebene Grösse überschreiten, sind im allgemeinen aus Leiterstäben aufgebaut. Jeder Stab weist einen gerade ausgeführten und in einer Nut der Maschine gehaltenen Mittelabschnitt auf sowie zwei sich daran anschliessende, gekrümmt ausgebildete Endabschnitte, die zum Wickelkopf der Wicklung gehören. Die Fertigung eines solchen Leiterstabs ist relativ aufwendig und umfasst das Verdrillen von nebeneinanderliegenden Stapeln von flachen Teilleitern zumindest über die gesamte Länge der Nut und das Aufbringen einer Hauptisolierung auf die miteinander verdrillten Teilleiter. Zum Aufbringen der Hauptisolierung werden zunächst die verdrillten Teilleiter mit einem Isolierband bewickelt, und anschliessend wird in einer Form das Isolierband um die Teilleiter zu einem Isolierverband verfestigt.

Verfahren der eingangs genannten Art sind in H.Sequenz "Herstellung der Wicklungen elektrischer Maschinen", Springer-Verlag 1973, insbesondere S.150 - 154, beschrieben. Bei einem dieser Verfahren wird ein aus verdrillten Teilleitern bestehender, unbewickelter Leiterstab mit einem Glimmerband bewickelt. Der bewickelte Leiterstab wird sodann in einem Ofen getrocknet und entgast und anschliessend in einer druckfesten Wanne unter Vakuum mit einem vorgewärmten und entgasten Tränkharz imprägniert. Zur Verbesserung der Imprägnierung werden der Leiterstab und das Tränkharz unter Druck gesetzt. Der imprägnierte Leiterstab wird sodann vorsichtig aus der Tränkwanne entfernt, nach Bewickeln mit Trennfolie in einer Presse in seine endgültige Form gebracht und bei erhöhten Temperaturen ausgehärtet.

Bei einem alternativen Verfahren wird der getrocknete Leiterstab in eine vakuum- und druckfeste Form gebracht und bereits in der Form unter Vakuum und nachfolgend unter Druck mit dem Tränkharz imprägniert. Der solchermassen geformte und imprägnierte Leiterstab wird anschliessend in der Form ausgehärtet. Da der getrocknete Leiterstab beim Einbringen in die Form gepresst wird und da zudem der Leiterstab oft eine ganz erhebliche Länge aufweist, bedarf es häufig einer langen Zeitdauer, um den formgepressten, getrockneten Leiterstab ausreichend zu evakuieren und zu entgasen.

### KURZE DARSTELLUNG DER ERFINDUNG

Der Erfindung, wie sie in den Patentansprüchen angegeben ist, liegt die Aufgabe zugrunde, das Verfahren der eingangs genannten Art derart weiterzubilden, dass es in einfacher und wirtschaftlicher Weise ausgeführt werden kann und Leiterstäbe mit gleichmässig guten dielektrischen Eigenschaften liefert, sowie eine Vorrichtung anzugeben, die zu eine besonders vorteilhaften Ausführung des Verfahrens geeignet ist.

Mit dem erfindungsgemässen Verfahren können in kurzer Zeit und mit geringem verfahrenstechnischem Aufwand Leiterstäbe mit hervorragenden dielektrischen Eigenschaften hergestellt werden. Von besonderem Vorteil ist es, wenn der Stab mit einem mit Glimmer versehenen thermoplastischen Isolierband umwickelt wird, anschliessend in einer Form unter Erwärmung über den Fliesspunkt des Thermoplasten derart unter Druck gesetzt wird, bis in dem Isolierband vorhanden Restgase atomar gelöst werden, und der Leiterstab hiernach unter Druck abgekühlt wird, bis der Thermoplast sich wieder verfestigt. Hierdurch werden porenfreie Isolierungen und damit dielektrisch besonders hochwertige Leiterstäbe erreicht.

Bei einer vorteilhaften Vorrichtung zur Durchführung des erfindungsgemässen Verfahrens ist eine zweiteilige Form - bestehend aus einer oberen und einer unteren Formhälfte - zur Aufnahme des bewickelten Leiterstabs vorgesehen, wobei die Form derart getrennt ist, dass jede Formhälfte im wesentlichen zwei benachbarte Seiten des Leiterstabs überdeckt, wobei bei einer Druckausübung auf die Formhälften zueinander, der eingelegte Stab an allen Seitenflächen gleichmässig einem Druck ausgesetzt wird.

### KURZE BESCHREIBUNG DER ZEICHNUNGEN

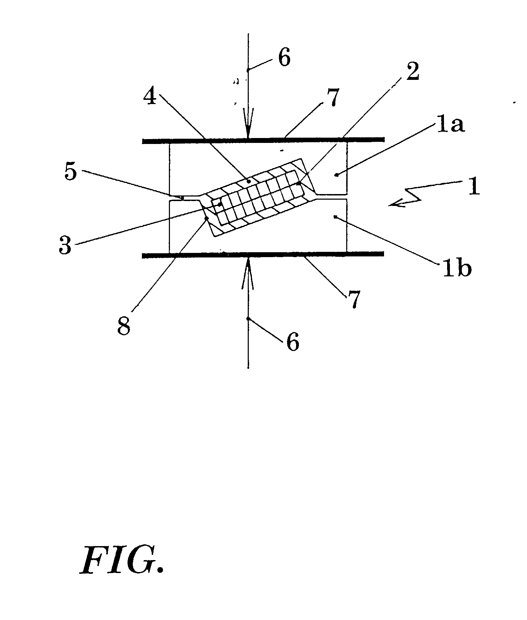

In der Zeichnung ist ein Ausführungsbeispiel der Erfindung vereinfacht dargestellt, und zwar zeigt die einzige
- Fig.: in einer Schnittdarstellung eine Form für die Herstellung eines Leiterstabes nach dem erfindungsgemässen Verfahren.

### WEG ZUR AUSFÜHRUNG DER ERFINDUNG

In der einzigen Fig. ist mit 1 eine Form bezeichnet, in der ein Leiterstab 2 zwecks Aufbringen einer elektrischen Isolierung 4 eingelegt ist. Hierfür weist die Form 1 zwei an einer Trennebene 5 benachbarte Formhälften 1a, 1b auf, die den Leiterstab 2 in ihren Kavitäten 8 aufnehmen. Um während des erfindungsgemässen und im folgenden beschriebenen Prozessverlaufs den Leiterstab einer Erwärmung und einem Pressvorgang zu unterziehen, sind die Formhälften mit Heiz- und Pressplatten 7 abgeschlossen, so dass in Richtung der Pfeile 6 der Leiterstab 2 einer pressenden Formgebung unterzogen werden kann. Hierbei ist von grossem Vorteil, dass jede Formhälfte la, 1b im wesentlichen zwei benachbarte Seiten des Leiterstabs derart überdeckt, so dass in Pressrichtung 6 auf einfache Weise auf alle vier Seiten des Leiterstabes 2 gleichmässig Druck ausgeübt werden kann.

Das erfindungsgemässe Verfahren zur Herstellung eines vorzugsweise als Roebelstab ausgebildeten Leiterstabs 2 mit einer Hauptisolierung 4 gliedert sich in die folgenden Schritte:
- Der Leiterstab 2 wird mit einem die spätere Hauptisolierung 4 bildenden Isolierband umwickelt. Dieses Isolierband besteht aus einem thermoplastischen Kunststoff, im Beispielsfall PSU, mit einem elektrisch hochwertigen Isolations-Füllstoff wie Glimmer. In Gewichtsanteilen ausgedrückt besteht das Isolierband aus 70% PSU und 30 % Glimmer.
- Der bewickelte Leiterstab 2 wird mittels Erwärmung bis auf etwa 150 °C 24 Stunden einer Trocknung unterzogen und in die Form 1 eingelegt. Im noch unbehandelten Fall weist dabei der bereits mit Isolierband bewickelte Leiterstab 2 einen grösseren Querschnitt auf, als die Kavitäten 8 im Raum geben. In diesem Zustand sind die Formhälften la und 1b an der Trennebene 5 beabstandet.
- Mittels der Heiz- und Pressplatten 7 wird nun bis über die Fliessgrenze des PSU hinaus der Leiterstab 2 erwärmt. Die Fliessgrenze liegt etwa bei 220 °C und der Leiterstab 2 wird bis etwa 250 °C erwärmt um das vollständiges Fliessen zu gewährleisten.
- Oberhalb der Fliessgrenze wird der Leiterstab über die Heiz- und Pressplatten 7 einem Druck von etwa 12 bar ausgesetzt. Dieser Druck ermöglicht die vollständige atomare Lösung von Restgas im Isolierband während des Fliesszustandes des thermoplastischen PSU. Das Restgas besteht im wesentlichen aus Lufteinschlüssen, die während des Wickelns des Isolierbandes zurückbleiben. Diese Lufteinschlüsse werden im flüssigen PSU vollständig unter Druck atomar gelöst.
- Unter Aufrechterhalten des Drucks wird die Fliessphase des PSU durch Abkühlen unter die Fliesstemperatur nach etwa 5 Minuten abgeschlossen. Der Leiterstab 2 wird abgekühlt während sich das thermoplastische PSU unter Druck wieder verfestigt. Hierbei bleibt aufgrund des Druckes das Restgas vollständig atomar gelöst im Kunststoff, wodurch eine porenfreie Isolierung um den Leiterstab 2 herum geschaffen wird.

Die Restgaseinschlüsse werden im isolierenden PSU absorbiert und somit auf ein dielektrisch unschädliches Minimum reduziert. Auf diese Art wird erstmalig ein vergleichsweise kurzes und einfaches Herstellungsverfahren für Leiterstäbe 2 mit elektrischer Isolierung präsentiert, dass zudem eine frei wählbare Isolationsdicke ermöglicht. So ist beispielsweise die Isolationsdicke an den Schmalseiten des Leiterstabes 2 dicker wählbar für eine hochwertigere Isolation, während die Breitseiten zwecks besserem Wärmetransport von den Teilleitern 3 nach aussen die Isolationsdicke dünner gewählt werden kann.

Den Anforderungen - elektrischer und wärme technischer Natur - an eine Isolierung für Leiterstäbe 2 kann somit optimal und auf einfache Art Rechnung getragen werden.

Selbstverständlich ist die Erfindung nicht beschränkt auf das oben dargestellte Ausführungsbeispiel. So ist vor Anwendung des Verfahrens beispielsweise denkbar zwischen dem Isolierband und dem zu isolierenden Leiter eine leitfähige Schicht oder ein leitfähiges Band vorzusehen, zwecks Innenglimmschutz. Gleichermassen kann ebenfalls ein ähnlich aufgebauter Aussenglimmschutz um die Isolierung Verwendung finden.

### BEZEICHNUNGSLISTE

- 1: Form
- 1a, 1b: obere, bzw. untere Formhälfte
- 2: Leiterstab
- 3: Teilleiter
- 4: Hauptisolierung
- 5: Trennebene
- 6: Pfeile der Wirkrichtung des Druckes
- 7: Heiz- und Pressplatte
- 8: Kavität in 1a, 1b

## Patentansprüche

1. Verfahren zur Herstellung eines vorzugsweise als Roebelstab ausgebildeten Leiterstabs (2) der Wicklung einer elektrischen Maschine durch Bewickeln des unbewickelten Leiterstabs (2) mit Isolierband, durch Einlegen des bewickelten Leiterstabs (2) in eine druckfeste Form (1) und durch Verfestigen des Isolierbandes an dem Leiterstab (2) in der Form,
dadurch gekennzeichnet,
- dass der Leiterstab (2) mit einem thermoplastischen Isolierband bewickelt wird und anschliessend in die Form (1) eingelegt wird,
- dass die Form (1) bis über die Fliessgrenze des Thermoplasten erwärmt wird,
- dass der Leiterstab (2) in der Form (1) unter Druck gesetzt wird und unter Druck abgekühlt wird bis die Isolierung (4) verfestigt ist.

2. Verfahren nach Anspruch 1,
dadurch gekennzeichnet, dass das thermoplastische Isolierband mit einem Füllstoff versehen ist.

3. Verfahren nach Anspruch 2,
dadurch gekennzeichnet, dass das thermoplastische Isolierband mit Glimmer als Füllstoff versehen ist.

4. Verfahren nach einem der Ansprüche 1 bis 3,
dadurch gekennzeichnet, dass der über die Fliessgrenze des thermoplastischen Isolierbandes (24) erwärmte und bewickelte Leiterstab (2) in der Form (1) derart unter Druck gesetzt wird, dass Restgase im fliessfähigen Zustand des Thermoplasten atomar gelöst werden.

5. Vorrichtung zur Durchführung des Verfahrens nach Anspruch 1,
dadurch gekennzeichnet,
dass die Form (1) zur Aufnahme des bewickelten Leiterstabs (2) eine obere und eine untere Formhälfte (1a, 1b) aufweist, wobei jede Formhälfte (1a, 1b) im wesentlichen zwei benachbarte Seiten des Leiterstabs (2) überdeckt, und wobei die Seiten des Leiterstabes (2) derart ausgerichtet sind, dass unter einer Druckeinwirkung (6) auf die Formhälften (1a, 1b) zueinander der Druck gleichmässig auf die Seiten des Leiterstabes ausübbar ist.
